# EUROPÄISCHE PATENTSCHRIFT

(11) **EP 2 701 903 B1**
(45) Veröffentlichungstag und Bekanntmachung des Hinweises auf die Patenterteilung: **12.05.2021**
(21) Anmeldenummer: 12710721.7
(22) Anmeldetag: 22.03.2012
(51) Int. Cl.: B32B 1/08, B32B 25/14, B32B 25/04, F16L 11/04

(54) **SCHLAUCH, DER EIN KÜHLMITTEL TRANSPORTIERT, SEINE VERWENDUNG UND VERFAHREN ZU DESSEN HERSTELLUNG**
HOSE FOR TRANSPORTING COOLANT, ITS USE AND METHOD OF PREPARATION
TUYAU POUR TRANSPORTER UN AGENT DE REFROIDISSEMENT, SON UTILISATION ET PROCEDE DE PREPARATION

(30) Priorität: 26.04.2011 DE 102011002256
(43) Veröffentlichungstag der Anmeldung: 05.03.2014
(73) Patentinhaber: ContiTech MGW GmbH, 34346 Hann. Münden (DE)
(72) Erfinder: SONT, Michael, 21640 Horneburg (DE)
(74) Vertreter: Continental Corporation
(86) Internationale Anmeldenummer: PCT/EP2012/055048
(87) Internationale Veröffentlichungsnummer: WO 2012/146441

(56) Entgegenhaltungen:
- EP-A1- 1 495 857
- EP-A2- 0 205 724
- DE-A1- 4 215 778
- DE-A1-102008 055 525
- DE-A1-102009 026 254

## Beschreibung

Die Erfindung betrifft einen Schlauch, der ein Kühlmittel transportiert und wenigstens folgenden Schichtenaufbau aufweist:
- eine erste Schicht aus einer vernetzten Kautschukmischung, die als medienbeständige Innenschicht mit Kontakt zum Kühlmittel wirkt; und
- eine zweite Schicht aus einer vernetzten Kautschukmischung, die auf der Außenseite der ersten Schicht aufliegt, wobei die erste Schicht und die zweite Schicht einen Haftverbund bilden.

In Kraftfahrzeugen mit Verbrennungsmotoren übernimmt der Kühlwasserkreislauf folgende Aufgaben:
- Es erfolgt eine Abführung der überschüssigen durch die Verbrennung entstehenden Wärme vom Motor zum Wasserkühler, gesteuert über ein einfaches Thermostatventil oder eine Kennfeldsteuerung, und zwar in Verbindung mit einer motordrehzahlabhängigen oder Kennfeld-gesteuerten elektrischen Kühlmittelpumpe.
- Es erfolgt ein Zuführung der überschüssigen durch die Verbrennung entstehenden Wärme vom Motor zu einem oder mehreren Heizungswärmetauschern, gesteuert entweder dauernd oder über ein Heizungsventil.
- Es erfolgt eine Kühlung der Ladeluft in Ladeluft-Wärmetauschern, die mit Kühlwasser als Kühlmittel betrieben werden.
- Es erfolgt eine Kühlung von Zusatzaggregaten, beispielsweise von Stromgeneratoren, Automatik-Getrieben, Turboladern, Abgasrückführung und von anderen Aggregaten.
- Es erfolgt schließlich ein Ausgleich der Schwankungen des Kühlmittelvolumens über einen Ausgleichsbehälter.

Als Kühlmittel für den Kühlwasserkreislauf in Kraftfahrzeugen mit Verbrennungsmotoren wird üblicherweise ein Wassergemisch mit mindestens 33 Vol%-Anteil Ethylenglykol (garantiert einen Einfrierschutz bis etwa -20°C) und maximal 68 Vol%-Anteil Ethylenglykol (garantiert einen Einfrierschutz bis etwa -69°C) eingesetzt. Üblich sind in Mitteleuropa etwa 50 Vol%-Anteil an Ethylenglykol mit Einfrierschutz bis etwa -40°C. Der Gehalt an Ethylenglykol im Kühlwasser sollte 60 Vol% nicht übersteigen, da sonst durch die geringere spezifische Wärmekapazität des Ethylenglykols die Kühlleistung zu stark absinkt. Das richtige Mischungsverhältnis von Wasser zu Ethylenglykol wird eingestellt durch Verdünnung des Kühlmittels auf Basis von unverdünntem Ethylenglykol mit Wasser, dessen Härte und Salzgehalt einen bestimmten Maximalwert nicht übersteigen sollte.

Wegen des im Kühlwasser immer vorhandenen Sauerstoffs müssen zudem alle metallischen Komponenten im Kühlwasserkreislauf gegen Korrosion geschützt werden. Diesen Schutz gegen Korrosion der metallischen Teile im Kühlwasserkreislauf erreicht man durch Zusatz von Korrosionsschutzmitteln zum Kühlmittel. Üblich sind dabei folgende drei Varianten von Korrosionsschutzmitteln:
- Silikathaltige Hybrid-Korrosionsschutzmittel;
- Silikatfreie OAT-Korrosionsschutzmittel und
- Silikathaltige Si-OAT-Korrosionsschutzmitteln, die die Vorteile von Hybrid- und OAT-Korrosionsschutzmittel kombinieren.

Für besondere Einsatzzwecke ohne Frostgefahr wird auch Wasser ohne Ethylenglykol-Zusatz, aber mit Korrosionsschutzmitteln verwendet.

Die Innenschicht von Kühlwasserschläuchen muss daher beständig sein gegen Kühlmittelgemische mit Korrosionsschutzmittel in den oben angegebenen Zusammensetzungen im Temperaturbereich von -40°C bis zu Dauertemperaturen von 125°C und Spitzentemperaturen von 160°C.

Diese geforderte Beständigkeit gegen Kühlmittelgemische besitzen nur peroxidisch vernetzte Kautschukmischungen auf der Basis von EPM oder EPDM. Auf diese Kautschukmischungen und Alternativen wird noch näher eingegangen.

Die Betriebsdrücke im Kühlkreislauf entstehen durch hohe Temperaturen des Kühlmittels (Siedepunkt etwa 110°C) und durch den Förderdruck der Kühlwasserpumpe. Für die Aufnahme von Relativbewegungen zwischen den Stutzen, die motorfest oder an motorfesten Aggregaten angebracht sind, und Stutzen, die karosseriefest angebracht sind, beispielsweise Wasserkühler und Ausgleichsbehälter, müssen die Kühlwasserschläuche neben der Kühlmittelbeständigkeit und der Druckbeständigkeit auch eine hohe Flexibilität und dynamische Tüchtigkeit aufweisen.

Zur Aufnahme der Druckbelastung werden Kühlwasserschläuche mit einem Festigkeitsträger zwischen der Innenschicht und der Außenschicht hergestellt. Der Festigkeitsträger kann in einer oder mehreren Lagen ausgeführt sein. Eingesetzt werden dabei zumeist synthetische Garne, beispielsweise aus Polyestern oder Polyamiden. Besonders zu erwähnen sind hier Aramid-Garne aus aromatischem Polyamid, beispielsweise para-Aramid, meta-Aramid und deren Modifikationen. Auch alle anderen Garne mit einer ausreichenden Temperatur- und Hydrolysebeständigkeit sind einsetzbar. Die Herstellung dieser Kühlwasserschläuche kann geschehen über Extrusionsverfahren mit Einbringen des Festigkeitsträgers, beispielsweise über Stricken, Wendeln, Flechten oder über Wickelverfahren von mit Kautschukmischungen belegten Geweben oder auch durch Kombinationen aus Extrusions- und Wickelverfahren.

Im Folgenden wird nun näher auf den Stand der Technik der Kautschukmischungen derartiger Schläuche eingegangen, wobei beispielsweise als Literatur die DIN 73411 (Werkstoffklasse B) zu nennen ist.

Kühlwasserschläuche werden aus peroxidisch vernetzten Kautschukmischungen auf der Basis von EPM oder EPDM hergestellt, und zwar sowohl für die Innenschicht als auch die Außenschicht. Sie zeichnen sich durch ein gutes Setzungsverhalten bei gleichzeitig hoher dynamischer Tauglichkeit aus. Die Temperaturbeständigkeit einer EPDM-Mischung für die Außenschicht der Kühlwasserschläuche reicht bis maximal 140°C Dauertemperaturbelastbarkeit mit einer Alterungsdauer von 1000 Stunden und maximal 160°C Spitzentemperaturbelastbarkeit mit einer Alterungsdauer von 168 Stunden bei der Heißluftalterung, wobei die Reißdehnung nach der Alterung um maximal 50% gegenüber dem Anlieferungswert abnehmen darf. Die Temperaturbeständigkeit einer EPM-Mischung für die Außenschicht der Kühlwasserschläuche reicht bis maximal 150°C Dauertemperaturbelastbarkeit mit einer Alterungsdauer von 1000 Stunden und maximal 170°C Spitzentemperaturbelastbarkeit mit einer Alterungsdauer von 168 Stunden bei der Heißluftalterung, wobei die Reißdehnung nach der Alterung auch hier nur um maximal 50% gegenüber dem Anlieferungswert abnehmen darf.

Kühlwasserschläuche aus EPM- oder EPDM-Mischungen für die Innenschicht und Außenschicht nach dem oben erwähnten Stand der Technik weisen jedoch folgende Nachteile auf:
- Selbst bei Einsatz einer EPM-Mischung ist die Temperaturbeständigkeit der Außenschicht begrenzt auf eine Dauertemperatur 150°C mit einer Spitzentemperatur 170°C.
- Die EPDM- oder EPM-Außenschicht ist unbeständig gegen Motoröle, Getriebeöle und Dieselkraftstoffe.

Im Folgenden werden noch andere Werkstoffkonzepte von Kühlwasserschläuchen und ihre Nachteile vorgestellt.
- Kühlwasserschläuche aus einer Silikonkautschuk-Mischung für die Innenschicht und Außenschicht entsprechend der DIN 73411 (Werkstoffklasse C) weisen zwar eine verbesserte Hitzebeständigkeit und Ölbeständigkeit der Außenschicht auf, die Kühlmittelbeständigkeit der Innenschicht ist aber schwächer als bei den peroxidisch vernetzten EPM- oder EPDM-Mischungen.
- Kühlwasserschläuche aus einer Silikonkautschuk-Mischung für die Innenschicht und Außenschicht sind wegen der geringen Standfestigkeit der Silikonkautschuk-Mischungen schwieriger herzustellen als entsprechende EPM- oder EPDM-Schläuche.
- Kühlwasserschläuche aus einer Silikonkautschuk-Mischung für die Innenschicht und Außenschicht sind vom Materialpreis deutlich teurer als EPM-, EPDM- oder AEM-Mischungen.
- Kühlwasserschläuche aus einer peroxidisch vernetzten AEM-Mischung für die Innenschicht und Außenschicht weisen zwar eine verbesserte Hitzebeständigkeit und Ölbeständigkeit der Außenschicht auf, die Kühlmittelbeständigkeit der Innenschicht ist aber für Kühlwasserschläuche nicht ausreichend.
- Kühlwasserschläuche aus einer peroxidisch vernetzten EPM- oder EPDM-Mischung für die Innenschicht und einer peroxidisch vernetzten CM-Mischung für die Außenschicht weisen zwar eine verbesserte Ölbeständigkeit der Außenschicht auf, die Hitzebeständigkeit der CM-Außenschicht ist aber schlechter als bei einer peroxidisch vernetzten EPM- oder EPDM-Außenschicht.
- Kühlwasserschläuche nach der Patentschrift DE 42 15 778 C2 und der Offenlegungsschrift EP 0 205 724 A2 mit einer Innenschicht aus einer peroxidisch vernetzten EPM- oder EPDM-Mischung und einer Außenschicht aus einer peroxidisch vernetzten AEM- oder ACM-Mischung sind wegen der peroxidischen Vernetzung der AEM- bzw. ACM-Mischung entweder dynamisch nur begrenzt belastbar oder zeigen ein schlechtes Setzungsverhalten der Außenschicht.

Gemäß EP 1 495 857 A1 ist für die Innenschicht des dort offenbarten Kühlwasserschlauches ein Verschnitt aus zwei verschiedenen EPDM-Typen mit jeweils unterschiedlichem Ethylen-Gehalt notwendig. Als Außenschicht wird in den Beispielen auf CIIR verwiesen.

DE 42 15 778 A1 beschreibt einen mehrschichtigen Gummischlauch, der eine Innenschicht aus EPDM und eine Außenschicht aus ACM enthält. Hierbei wird bei der Innenschicht zwischen schwefelvulkanisierten EPDM und peroxidisch vulkanisiertem EPDM verglichen (siehe Tabelle 1). Das ACM ist lediglich peroxidisch vernetzt.

EP 0 205 724 A2 beschreibt einen hochdruckfesten und temperaturbeständigen Dampf- und Heißwasserschlauch, der eine Außenschicht aus AEM und eine Innenschicht aus EPDM besitzt.

Im Hintergrund der hier geschilderten Gesamtproblematik und des in dem oben erwähnten Standes der Technik offenbarten Zielkonfliktes besteht die Aufgabe der Erfindung darin, einen gattungsgemäßen Schlauch bereitzustellen, der sich einerseits durch eine gegenüber dem Kühlmittel medienbeständige Innenschicht und andererseits durch eine gegen Motorenöle, Dieselkraftstoffe, Hydraulikflüssigkeiten und andere Medien beständige Außenschicht auszeichnet, und zwar unter dem Aspekt vieler Anwendungsmöglichkeiten.

Gelöst wird diese Aufgabe dadurch, dass
- die erste Schicht aus einer peroxidisch vernetzten Kautschukmischung auf der Basis eines
   EPM/EPDM-Verschnittes besteht und
- die zweite Schicht aus einer diaminisch vernetzten und DOTG-freien Kautschukmischung auf der Basis von verschnittfreiem ACM oder eines ACM-Verschnittes oder von verschnittfreiem AEM oder eines AEM-Verschnittes besteht.
Im Rahmen einer einfachen Schlauchausführung kann die zweite Schicht ohne weitere darauf aufbauende Schichten zugleich die Außenschicht bilden. Ein derartiger Schlauch wird jedoch nur dann eingesetzt, wenn das zu führende Medium nicht unter Überdruck steht.

Zumeist wird jedoch der Schlauch mit einer zusätzlichen Außenschicht versehen, insbesondere in Verbindung mit einer eingebetteten Festigkeitsträgerschicht, die ein- oder mehrlagig ausgebildet sein kann. Auf diese Weise kann das zu transportierende Medium unter Druck stehen. Bei einem derartigen Schlauchaufbau liegt die zweite Schicht als Zwischenschicht vor, und zwar zwischen der ersten Schicht als Innenschicht und der dritten Schicht als Festigkeitsträgerschicht. Die vierte Schicht bildet die Außenschicht. Die Außenschicht besteht dabei aus einer diaminisch vernetzten und DOTG-freien Kautschukmischung auf der Basis von verschnittfreiem ACM oder eines ACM-Verschnittes oder von verschnittfreiem AEM oder eines AEM-Verschnittes.

Zumeist wird für die erste Schicht (Innenschicht), zweite Schicht (Zwischenschicht) und die vierte Schicht (Außenschicht) die verschnittfreie Werkstoffversion bevorzugt. Dies gilt insbesondere für die Zwischenschicht.

Die dritte Schicht (Festigkeitsträgerschicht) ist aus einem Gewebe, Gewirke oder Gestrick gebildet, insbesondere auf der Basis eines textilen Werkstoffes. Die diesbezüglichen Werkstoffe können ein Polyamid (PA), Polyimid (PI), ein Aramid, insbesondere para-Aramid oder meta-Aramid, ein Polyvinylacetal (PVA), ein Polyetheretherketon (PEEK), ein Polyester, insbesondere Polyethylentherephthalat (PET) oder Polyethylen-2,6-naphthalat (PEN), ein Polysulfon (PSU), ein Polyphenylen oder Polyphenylenderivat, insbesondere ein Polyphenylensulfid (PPS), sein. Auch Hybridkonzepte, beispielsweise in Form eines Mischzwirns, können zum Einsatz gelangen. Im Rahmen einer neueren Schlauchentwicklung (DE 10 2008 037 417 A1) kommt beispielsweise ein Hybridkonzept aus PPS und PA zur Anwendung. Das PPS als Hochleistungswerkstoff trägt zu einer hohen Festigkeit bei, während das PA neben dem Festigkeitsträgerbeitrag auch über seine Haftaktivierbarkeit zu einer verbesserten Haftung gegenüber dem umgebenden elastomeren Werkstoff beiträgt. Die dritte Schicht (Festigkeitsträgerschicht) steht in diesem Zusammenhang zumeist in einem direkten Kontakt zur zweiten Schicht (Zwischenschicht) einerseits und zur vierten Schicht (Außenschicht) andererseits, und zwar unter Ausbildung eines Haftverbundes.

Auf die Kautschukmischungen der folgenden Schichten wird nun näher eingegangen. Neben der Kautschukkomponente, verschnittfrei oder im Verschnitt, enthält die Kautschukmischung noch die üblichen Mischungsingredienzien. Von besonderer Bedeutung ist dabei das Vernetzersystem, gebildet aus einem Vernetzungsmittel und einem Coagenz oder Beschleuniger. Die weiteren Mischungsingredienzien umfassen einen Füllstoff und/oder ein Metalloxid und/oder einen Weichmacher und/oder ein Verarbeitungshilfsmittel und/oder ein Alterungsschutzmittel und/oder ein Haftmittel.

Darüber hinaus können weitere Zusatzsstoffe der Kautschukmischung beigegeben werden, beispielsweise Kurzfasern, Füllstoffmehle, Recyclate, Silane, Farbstoffe, Wachse, Stabilisatoren, Gleithilfen, Verzögerer.

### - Erste Schicht (Innenschicht)

Die Kautschukmischung basiert auf einem EPM/EPDM-Verschnitt, beispielsweise mit 30 phr EPM und 70 phr EPDM. Die Mischungsingredienzien sind:

| | |
|---|---|
| Füllstoff | a) |
| Metalloxid | b) |
| Weichmacher | c) |
| Haftmittel (z.B. ein klebrigmachendes Harz) | |
| Verarbeitungshilfsmittel auf Basis Organosilikon | |
| Verarbeitungshilfsmittel PEG | |
| Alterungsschutzmittel | d) |
| Coagenz | e) |
| Peroxidisches Vernetzungsmittel | f) |

a) FEP-, GPF-, HAF-, SAF-, SRF-, Flamm-, MT-Ruße, Kieselsäuren, Kreide, Kaolin, Aluminiumsilikate, Calciumsilikate, Magnesiumsilikate und andere dem Fachmann bekannte Füllstoffe oder Kombinationen daraus, bevorzugt aber Ruße der oben genannten Art oder Kombinationen dieser Ruße mit hydrophobierter Kreide
b) CaO, MgO und andere dem Fachmann bekannte Metalloxide, jedoch kein ZnO
c) Mineralölweichmacher, Polymerweichmacher, Esterweichmacher und andere dem Fachmann bekannte Weichmacher oder Kombiantionen daraus, die mit EPM oder EPDM verträglich sind
d) Alle dem Fachmann bekannten Alterungsschutzmittel oder Kombinationen daraus
e) Dem Fachmann bekannte Allylverbindungen, beispielsweise TAC, TAIC, TAP, TATM, DAPE, DATP, TAE, TC und ATC; Methacrylate, beispielsweise BDMA, EDMA, TEDMA und TRIM; ZDMA; BR, insbesondere 1,2-BR; N,N'-m-phenylen-dimaleimid; Kombinationen der vorgenannten Coagenzien
f) Alle dem Fachmann bekannten Peroxide, beispielsweise Alkyl-Aralkyl-Peroxide, Diaralkyl-Peroxide, Peroxyketale, Peroxyester sowie Kombinationen daraus, bevorzugt Dicumylperoxid, Bis(tert-butylperoxyisopropyl)benzol und 2,5-Bis(tert-butylperoxy)-2,5-dimethylhexan

Der Mengenanteil an Coagenz (Aktivator) beträgt 0,1 phr bis 20,0 phr, insbesondere 1,0 phr bis 15,0 phr, insbesondere wiederum 5,0 phr bis 15,0 phr.

Der Mengenanteil des peroxidischen Vernetzungsmittels beträgt 3,0 phr bis 10,0 phr, insbesondere 4,5 phr bis 8,5 phr, insbesondere wiederum 5,5 phr bis 7,5 phr.

### - Zweite Schicht (Zwischenschicht)

Die Kautschukmischmischung basiert auf ACM oder AEM mit einem Cure-site-Monomer für die Diaminvernetzung. Bevorzugt werden dabei die verschnittfreien Kautschukmischungen. Die Mischungsingredienzien sind:

| | |
|---|---|
| Füllstoff | g) |
| Weichmacher | h) |
| Haftmittel (z.B. ein klebrigmachendes Harz) | |
| Verarbeitungshilfsmittel | |
| Alterungschutzmittel | i) |
| Alkylamin | |
| Beschleuniger | j) |
| Diaminisches Vernetzungsmittel | k) |

g) FEP-, GPF-, HAF-, SAF-, SRF-, Flamm, MT-Ruße, Kieselsäure, Kreide, Kaolin, Aluminiumsilikate, Calciumsilikate, Magnesiumsilikate und andere dem Fachmann bekannte Füllstoffe oder Kombinationen daraus, bevorzugt aber Ruße der oben genannten Art oder Kombinationen daraus
h) Polymerweichmacher, Esterweichmacher und andere dem Fachmann bekannte Weichmacher oder Kombinationen daraus, die mit ACM oder AEM verträglich sind
i) Alle dem Fachmann bekannten Alterungsschutzmittel oder Kombination daraus
j) Dem Fachmann für ACM und AEM bekannte basische Beschleuniger oder Kombinationen daraus, insbesondere DBU (DE 10 2008 055 525 A1), jedoch kein als giftig und krebserregend eingestuftes DOTG
k) Dem Fachmann bekannte Diamine als Vernetzungsmittel, beispielsweise HMD und HMDC oder Kombinationen daraus, wobei der Zusatz eines peroxidischen
   Vernetzungsmittel in geringen Mengen möglich ist, jedoch vorzugsweise frei von Peroxiden ist

Der Beschleuniger DBU entfaltet insbesondere in Verbindung mit HMD und/oder HMDC, insbesondere wiederum mit HMDC, eine optimale Wirkung in der Vulkanisationsgeschwindigkeit und in der Lagerstabilität einer ACM- oder AEM-Kautschukmischung.

Der Mengenanteil des Beschleunigers beträgt 0,5 phr bis 2,4 phr, insbesondere 0,8 phr bis 2,0 phr, insbesondere wiederum 1,0 phr bis 1,8 phr.

Der Mengenanteil des diaminischen Vernetzungsmittels beträgt 0,3 phr bis 2,1 phr, insbesondere 0,8 phr bis 1,6 phr, insbesondere wiederum 1,0 phr bis 1,4 phr.

Der hier verwendete Begriff "Cure-site-Monomer" bedeutet ein Monomer mit funktioneller chemischer Gruppe, die mit dem Vernetzungsmittel reagiert.

### - Vierte Schicht (Außenschicht)

Die Kautschukmischung basiert auf ACM oder AEM mit Cure-site-Monomer für die Diaminvernetzung. Bevorzugt werden dabei die verschnittfreien Kautschukmischungen. Die Mischungsingredienzien sind:

| | |
|---|---|
| Füllstoff | g) |
| Weichmacher | h) |
| Verarbeitungshilfsmittel | |
| Alterungsschutzmittel | i) |
| Alkylamin | |
| Beschleuniger | j) |
| Diaminisches Vernetzungsmittel | k) |

Hinsichtlich der Erläuterungen der Mischungsingredienzien wie auch der Mengenanteile des Beschleunigers und des diaminischen Vernetzungsmittels wird auf die zweite Schicht (Zwischenschicht) verwiesen.

Die Gesamtmenge der Mischungsingredienzien, und zwar ohne das Vernetzersystem, beträgt 50 phr bis 400 phr, insbesondere 80 phr bis 160 phr.

Ansonsten wird hinsichtlich der Mischungsingredienzien auf den allgemeinen Stand der Kautschukmischungstechnologie sowie insbesondere auf die Offenlegungsschrift DE 10 2009 026 254 A1 verwiesen.

Im Folgenden werden noch einige im Zusammenhang mit der Kautschukmischung verwendete Kurzbezeichnungen erläutert:

| | | | |
|---|---|---|---|
| AEM | Ethylen-Acrylat-Kautschuk | | |
| ACM | Acrylat-Kautschuk | | |
| EPM | Ethylen-Propylen-Kautschuk | | |
| EPDM | Ethylen-Propylen-Dien-Kautschuk | | |
| HMD | Hexamethylendiamin | | |
| HMDC | Hexamethylendiamincarbamat | | |
| DBU | 1, 8-Diazabicyclo [5.4.0] undec-7-en | | |
| DOTG | Di-ortho-tolylguanidin | | |
| PEG | Polyethylenglykol | | |
| TAC | Triallylcyanurat | | |
| ZDMA | Zink-Dimethacrylat | | |
| SAF/SRF | super abrasion | ) | Kurzbezeichnungen für Ruß-Typen |
| HAF | high abrasion | ) | Römpps Chemie-Lexikon, Band 5, 1987 |
| FEF | fast extrusion | ) | ebenso |
| GPF | general purpose | ) | ebenso |
| phr | per hundred rubber | | |

Hinsichtlich der Mischungsingredienzien werden im Rahmen dieser Übersicht nur die besonders häufig verwendeten Substanzen näher erläutert. Ansonsten wird insbesondere auf Römpp Online verwiesen.

Das zu transportierende Kühlmittel ist Wasser, dem insbesondere ein Korrosionsschutzmittel beigemischt ist, ein Alkohol/Wasser-Gemisch, dem insbesondere wiederum ein Korrosionsschutzmittel beigemischt ist, oder ein nicht wässriges polares Medium, das beständig gegenüber der Innenschicht ist. Von besonderer Bedeutung ist ein Ethylenglykol/Wasser-Gemisch, ein Propylenglykol/Wasser-Gemisch oder ein Ethylenglykol/Glycerin/Wasser-Gemisch.

Hinsichtlich des Transportes des Kühlmittels findet der erfindungsgemäße Schlauch insbesondere folgende Anwendung:
- Der Schlauch wird zum Transport des Kühlmittels unter statischem oder zyklischem Überdruck und/oder bei Relativbewegung der Schlauchstutzen untereinander eingesetzt.
- Der Schlauch wird überall dort verwendet, an dessen Außenschicht eine Schutzwirkung gegen Abrieb und/oder Hitze und/oder quellende Medien gefordert werden.
- Der Schlauch kann zudem als Linearschlauch, Krümmerschlauch oder Abzweigschlauch mit jeweils glatter und/oder faltiger Oberfläche eingesetzt werden.
- Abschließend ist noch die Verwendung des erfindungsgemäßen Schlauches im Rahmen einer Schlauchanordnung, umfassend den Schlauch und wenigstens ein Zusatzbauteil, zu erwähnen. Der Schlauch kommt dabei insbesondere in Kombination mit einem Hennstecker, einer VDA-Kupplung, einem Rohrstutzen mit Befestigungselementen, einem Scheuerschutz oder einem Schellenhalter zum Einsatz.

Eine weitere Aufgabe der Erfindung besteht darin, ein Verfahren bereitzustellen, mit dem auf einfache wie auch kostengünstige Weise ein gattungsgemäßer Schlauch hergestellt werden kann.

Im Hinblick auf die erste Schicht und der mit ihr verbundenen zweiten Schicht kommen folgende drei Verfahrensvarianten zum Einsatz:

### - Variante A

Die erste Schicht aus der peroxidisch vernetzbaren Kautschukmischung und die zweite Schicht aus der diaminisch vernetzbaren Kautschukmischung werden nacheinander durch Extrusion gebildet.

### - Variante B

Die erste Schicht und die zweite Schicht mit den vernetzbaren Kautschukmischungen gemäß Variante A werden durch Coextrusion gebildet.

### - Variante C

Die erste Schicht und die zweite Schicht mit den vernetzbaren Kautschukmischungen gemäß der Variante A werden jeweils durch Kalandrieren gebildet.

Nach den Teilverfahrensschritten gemäß der Varianten A, B und C erfolgt dann die Fertigstellung des Schlauches, und zwar unter folgenden Gesichtspunkten:
- In Verbindung mit Anspruch 2 wird der Schlauchrohling aus erster Schicht (Innenschicht) und zweiter Schicht (Außenschicht) ohne weitere Schichten vulkanisiert. Der Schlauch ist also frei von einem Festigkeitsträger.
- In Verbindung mit Anspruch 3 wird der Schlauchrohling aus erster Schicht (Innenschicht) und zweiter Schicht (Zwischenschicht) zusätzlich mit einer dritten Schicht (Festigkeitsträgerschicht) und einer vierten Schicht (Außenschicht) konfektioniert, verbunden mit einer abschließenden Vulkanisation. Das Einbringen der ein- oder mehrlagigen Festigkeitsträgerschicht kann beispielsweise mittels Stricken, Wendeln oder Flechten erfolgen. Auch ein Wickelverfahren von mit Kautschukmischungen belegten Geweben ist möglich. Auch die Kombination von Extrusions- und Wickelverfahren kann zur Anwendung kommen. Diesbezüglich wird auf den allgemeinen Stand der Verfahrenstechnik bei der Herstellung von textilarmierten Schläuchen verwiesen.

Zwischen der ersten Schicht und der zweiten Schicht wird kein Haftvermittler aufgebracht, da die jeweiligen Kautschukmischungen dieser beiden Schichten bereits ein Haftmittel, beispielsweise in Form eines klebrigmachenden Harzes, enthalten (internes Haftsystem). Alternativ hierzu kann zwischen diesen beiden Schichten zusätzlich zu dem internen Haftsystem ein Haftvermittler aufgebracht werden, beispielsweise in Form eines ersten Haftvermittlers für die erste Schicht und eines zweiten Haftvermittlers für die zweite Schicht.

Die Erfindung wird nun anhand eines Referenzbeispieles unter Bezugnahme auf eine schematische Zeichnung erläutert.

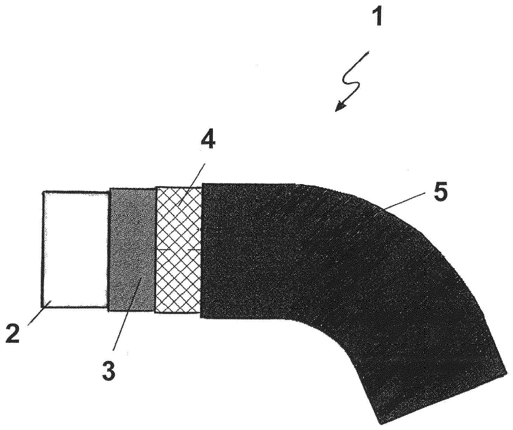

Die einzige Figur zeigt einen Schlauch 1 als Kühlwasserkrümmerschlauch mit öl- und hitzebeständiger Außenschicht. Der Schlauch weist dabei folgenden Schichtenaufbau mit folgender beispielhafter Werkstoffkonzeption auf:
- Erste Schicht 2:: peroxidisch vernetzte und verschnittfreie EPDM-Kautschukmischung als Innenschicht
- Zweite Schicht 3:: diaminisch vernetzte und verschnittfreie ACM-Kautschukmischung als Zwischenschicht
- Dritte Schicht 4:: Textilfäden aus Aramid als Festigkeitsträgerschicht
- Vierte Schicht 5: diaminisch vernetzte und verschnittfreie ACM-Kautschukmischung

Alle vier Schichten bilden im Zuge der Vulkanisation einen festen Haftverbund.

Werden an den Schlauch keine hohen Druckanforderungen gestellt, so kann die zweite Schicht 3 zugleich die Außenschicht bilden.

Im Folgenden werden nochmals die wesentlichen Vorteile des erfindungsgemäßen Schlauches zusammengefasst:
- Die ACM- und AEM-Schicht zeigen eine gute Beständigkeit gegen von außen einwirkenden Medien, beispielsweise Motoröle, Dieselkraftstoffe, Hydraulikflüssigkeiten, Getriebeöle und Hohlraumkorrosionsschutzwachse.
- Die ACM- und AEM-Schicht besitzen eine gegenüber einer EPM- oder EPDM-Außenschicht eine deutlich erhöhte Temperaturbeständigkeit von maximal 160°C und 180°C Spitzentemperatur.
- Die ACM- und AEM-Kautschukmischung enthalten kein DOTG als Beschleuniger.
- Die ACM- und AEM-Kautschukmischung werden nicht mit Peroxiden vernetzt, sondern mit Diaminen, und besitzen daher eine bessere dynamische Tauglichkeit. Außerdem können diese Mischungen ohne Spülprozess unter Anwesenheit von Restsauerstoffen im Heißdampf ohne Qualitätseinbußen vulkanisiert werden.
- Bei Verwendung der zweiten Schicht als Zwischenschicht ist es möglich, durch Verwendung einer verschnittfreien ACM- oder AEM-Kautschukmischung eine hohe dynamische Tauglichkeit zu erzielen.
- Man kann auf das Auftragen eines Haftvermittlers auf die EPM- oder EPDM-Innenschicht verzichten.
- Der EPM- oder EPDM-Kautschukmischung können anteilig helle Füllstoffe beigemischt werden. Dadurch besitzt die Innenschicht einen spezifischen Durchgangswiderstand von mindesten 10⁷ Ohm x cm nach DIN IEC 60093 und ist somit beständig gegen elektrochemische Rissbildung. Außerdem wird auf diese Weise kein elektrochemischer Angriff auf Schlauchstutzen verursacht.
- Die EPM- oder EPDM-Kautschukmischung für die Innenschicht erfüllt die Anforderung der Ablagerung in Punkt 3.13 der DIN 73411-1 (Werkstoffklasse B).
- Die EPM- oder EPDM-Kautschukmischung für die Innenschicht erfüllt die Anforderungen der DIN 73411 B für Kühlwasserschläuche an die Innenschicht, auch wenn die Lagerung in Kühlwasser bei einer Temperatur von 150°C statt bisher 125°C durchgeführt wird.

### Bezugszeichenliste

### (Teil der Beschreibung)

- 1: Schlauch
- 2: Erste Schicht (Innenschicht)
- 3: Zweite Schicht (Zwischenschicht)
- 4: Dritte Schicht (Festigkeitsträgerschicht)
- 5: Vierte Schicht (Außenschicht)

## Patentansprüche

1. Schlauch (1), der ein Kühlmittel transportiert und wenigstens folgenden Schichtenaufbau aufweist:
- eine erste Schicht (2) aus einer vernetzten Kautschukmischung, die als medienbeständige Innenschicht mit Kontakt zum Kühlmittel wirkt; und
- eine zweite Schicht (3) aus einer vernetzten Kautschukmischung, die auf der Außenseite der ersten Schicht (2) aufliegt, wobei die erste Schicht (2) und die zweite Schicht (3) einen Haftverbund bilden;
**dadurch gekennzeichnet, dass**
- die erste Schicht (2) aus einer peroxidisch vernetzten Kautschukmischung auf der Basis eines EPM/EPDM-Verschnitts besteht und
- die zweite Schicht (3) aus einer diaminisch vernetzten und DOTG-freien Kautschukmischung auf der Basis von verschnittfreiem ACM oder eines ACM-Verschnittes oder von verschnittfreiem AEM oder eines AEM-Verschnittes besteht.

2. Schlauch nach Anspruch 1, **dadurch gekennzeichnet, dass** die zweite Schicht (3) zugleich die Außenschicht des Schlauches bildet.

3. Schlauch nach Anspruch 1, **dadurch gekennzeichnet, dass** der Schlauch (1) zusätzlich versehen ist mit einer dritten Schicht (4) als Festigkeitsträgerschicht, die ein- oder mehrlagig ausgebildet ist und auf der zweiten Schicht (3) als Zwischenschicht aufliegt, sowie ferner mit einer auf der dritten Schicht (4) aufliegenden vierten Schicht (5) aus einer vernetzten Kautschukmischung, die als Außenschicht mit Beständigkeit gegen äußere Einflüsse wirkt, wobei sämtliche Schichten (2, 3, 4, 5) einen Haftverbund bilden.

4. Schlauch nach Anspruch 3, **dadurch gekennzeichnet, dass** die vierte Schicht (5) aus einer diaminisch vernetzten und DOTG-freien Kautschukmischung auf der Basis von verschnittfreiem ACM oder eines ACM-Verschnittes oder von verschnittfreiem AEM oder eines AEM-Verschnittes besteht.

5. Verfahren zur Herstellung eines Schlauches (1) nach einem der Ansprüche 1 bis 4, **dadurch gekennzeichnet, dass** die erste Schicht (2) aus der peroxidisch vernetzbaren Kautschukmischung und die zweite Schicht (3) aus der diaminisch vernetzbaren Kautschukmischung nacheinander durch Extrusion gebildet werden, verbunden mit der anschließenden Fertigstellung des Schlauches (1).

6. Verfahren zur Herstellung eines Schlauches (1) nach einem der Ansprüche 1 bis 4, **dadurch gekennzeichnet, dass** die erste Schicht (2) aus der peroxidisch vernetzbaren Kautschukmischung und die zweite Schicht (3) aus der diaminisch vernetzbaren Kautschukmischung durch Coextrusion gebildet werden, verbunden mit der anschließenden Fertigstellung des Schlauches (1).

7. Verfahren zur Herstellung eines Schlauches (1) nach einem der Ansprüche 1 bis 4, **dadurch gekennzeichnet, dass** die erste Schicht (2) aus der peroxidisch vernetzbaren Kautschukmischung und die zweite Schicht (3) aus der diaminisch vernetzbaren Kautschukmischung jeweils durch Kalandrieren gebildet werden, verbunden mit der anschließenden Fertigstellung des Schlauches (1).

8. Verfahren nach einem der Ansprüche 5 bis 7 in Verbindung mit Anspruch 2, **dadurch gekennzeichnet, dass** der Schlauchrohling aus erster Schicht (2) und zweiter Schicht (3) ohne weitere Schichten vulkanisiert wird.

9. Verfahren nach einem der Ansprüche 5 bis 7 in Verbindung mit Anspruch 3, **dadurch gekennzeichnet, dass** der Schlauchrohling aus erster Schicht (2) und zweiter Schicht (3) zusätzlich mit der dritten Schicht (4) und der vierten Schicht (5) konfektioniert wird, verbunden mit einer abschließenden Vulkanisation.

## Claims

1. Hose (1) which transports a coolant and at least has the following layer structure:
- a first layer (2) made of a crosslinked rubber mixture which acts as solvent-resistant internal layer and in contact with the coolant, and
- a second layer (3) made of a crosslinked rubber mixture which lies on the external side of the first layer (2), where the first layer (2) and the second layer (3) form an adhesive bond;
**characterized in that**
- the first layer (2) consists of a peroxidically crosslinked rubber mixture based on an EPM/EPDM blend and
- the second layer (3) consists of a diaminically crosslinked and DOTG-free rubber mixture based on unblended ACM or on an ACM blend or on unblended AEM or on an AEM blend.

2. Hose according to Claim 1, **characterized in that** the second layer (3) also forms the external layer of the hose.

3. Hose according to Claim 1, **characterized in that** the hose (1) additionally has a third layer (4) as reinforcement layer, which is configured to be single- or multiple-ply, and which lies on the second layer (3) as intermediate layer, and also moreover has, lying on the third layer (4), a fourth layer (5) made of a crosslinked rubber mixture, which acts as external layer with resistance to exterior effects, where all of the layers (2, 3, 4, 5) form an adhesive bond.

4. Hose according to Claim 3, **characterized in that** the fourth layer (5) consists of a diaminically crosslinked and DOTG-free rubber mixture based on unblended ACM or on an ACM blend or on unblended AEM or on an AEM blend.

5. Process for the production of a hose (1) according to any of Claims 1 to 4, **characterized in that** the first layer (2) made of the peroxidically crosslinkable rubber mixture and the second layer (3) made of the diaminically crosslinkable rubber mixture are formed in succession by extrusion, in conjunction with the subsequent manufacture of the hose (1).

6. Process for the production of a hose (1) according to any of Claims 1 to 4, **characterized in that** the first layer (2) made of the peroxidically crosslinkable rubber mixture and the second layer (3) made of the diaminically crosslinkable rubber mixture are formed in by coextrusion, in conjunction with the subsequent manufacture of the hose (1).

7. Process for the production of a hose (1) according to any of Claims 1 to 4, **characterized in that** the first layer (2) made of the peroxidically crosslinkable rubber mixture and the second layer (3) made of the diaminically crosslinkable rubber mixture are formed in respectively by calendering, in conjunction with the subsequent manufacture of the hose (1).

8. Process according to any of Claims 5 to 7 in conjunction with Claim 2, **characterized in that** the unvulcanised hose made of the first layer (2) and of second layer (3) is vulcanised without further layers.

9. Process according to any of Claims 5 to 7 in conjunction with Claim 3, **characterized in that** the unvulcanised hose made of the first layer (2) and of second layer (3) is additionally further processed with the third layer (4) and with the fourth layer (5), in conjunction with a concluding vulcanisation.

## Revendications

1. Tuyau flexible (1), qui transporte un agent réfrigérant et présente au moins la structure de couches suivante :
- une première couche (2) en un mélange de caoutchouc réticulé, qui agit en tant que couche intérieure résistante aux fluides, au contact de l'agent réfrigérant ; et
- une deuxième couche (3) en un mélange de caoutchouc réticulé, qui repose sur le côté extérieur de la première couche (2), la première couche (2) et la deuxième couche (3) formant un composite par adhérence ;
**caractérisé en ce que**
- la première couche (2) est constituée d'un mélange de caoutchouc réticulé par peroxyde à base d'une coupe d'EPM/EPDM et
- la deuxième couche (3) est constituée d'un mélange de caoutchouc réticulé par diamine et exempt de DOTG, à base d'ACM exempt de coupe ou d'une coupe d'ACM ou d'AEM exempt de coupe ou d'une coupe d'AEM.

2. Tuyau flexible selon la revendication 1, **caractérisé en ce que** la deuxième couche (3) forme simultanément la couche extérieure du tuyau flexible.

3. Tuyau flexible selon la revendication 1, **caractérisé en ce que** le tuyau flexible (1) est par ailleurs muni d'une troisième couche (4) en tant que couche de support de résistance, qui est configurée à une ou plusieurs strates et repose sur la deuxième couche (3) en tant que couche intermédiaire, ainsi qu'en outre d'une quatrième couche (5) reposant sur la troisième couche (4), en un mélange de caoutchouc réticulé, qui agit en tant que couche extérieure présentant une résistance aux effets extérieurs, toutes les couches (2, 3, 4, 5) formant un composite par adhérence.

4. Tuyau flexible selon la revendication 3, **caractérisé en ce que** la quatrième couche (5) est constituée d'un mélange de caoutchouc réticulé par diamine et exempt de DOTG, à base d'ACM exempt de coupe ou d'une coupe d'ACM ou d'AEM exempt de coupe ou d'une coupe d'AEM.

5. Procédé de fabrication d'un tuyau flexible (1) selon l'une quelconque des revendications 1 à 4, **caractérisé en ce que** la première couche (2) en le mélange de caoutchouc réticulable par peroxyde et la deuxième couche (3) en le mélange de caoutchouc réticulable par diamine sont formées l'une après l'autre par extrusion, en connexion avec la finition ultérieure du tuyau flexible (1).

6. Procédé de fabrication d'un tuyau flexible (1) selon l'une quelconque des revendications 1 à 4, **caractérisé en ce que** la première couche (2) en le mélange de caoutchouc réticulable par peroxyde et la deuxième couche (3) en le mélange de caoutchouc réticulable par diamine sont formées par coextrusion, en connexion avec la finition ultérieure du tuyau flexible (1).

7. Procédé de fabrication d'un tuyau flexible (1) selon l'une quelconque des revendications 1 à 4, **caractérisé en ce que** la première couche (2) en le mélange de caoutchouc réticulable par peroxyde et la deuxième couche (3) en le mélange de caoutchouc réticulable par diamine sont formées respectivement par calandrage, en connexion avec la finition ultérieure du tuyau flexible (1).

8. Procédé selon l'une quelconque des revendications 5 à 7 en connexion avec la revendication 2, **caractérisé en ce que** l'ébauche de tuyau flexible de la première couche (2) et de la deuxième couche (3) sans couches supplémentaires est vulcanisée.

9. Procédé selon l'une quelconque des revendications 5 à 7 en connexion avec la revendication 3, **caractérisé en ce que** l'ébauche de tuyau flexible de la première couche (2) et de la deuxième couche (3) est assemblée par ailleurs avec la troisième couche (4) et la quatrième couche (5), en connexion avec une vulcanisation finale.
